# FASCICULE DE BREVET EUROPEEN

(11) **EP 2 176 147 B1**
(45) Date de publication et mention de la délivrance du brevet: **09.11.2016**
(21) Numéro de dépôt: 08827152.3
(22) Date de dépôt: 16.07.2008
(51) Int. Cl.: B65G 47/08, B65G 47/29

(54) **DISPOSITIF DE FORMATION DE LOTS D'OBJETS SENSIBLEMENT PARALLELEPIPEDIQUES CIRCULANT SUR UNE BANDE DE CONVOYAGE**
VERFAHREN UND VORRICHTUNG ZUM GRUPPIEREN VON QUADERFÖRMIGEN GEGENSTÄNDEN AUF EINEM FÖRDERBAND
DEVICE FOR FORMING BATCHES OF SUBSTANTIALLY PARALLELEPIPED OBJECTS MOVING ON A CONVEYOR BELT

(30) Priorité: 30.07.2007 FR 0705549
(43) Date de publication de la demande: 21.04.2010
(73) Titulaire: C.E.R.M.E.X. CONSTRUCTIONS ETUDES ET RECHERCHES DE MATERIELS POUR L'EMBALLAGE D'EXPEDITION, 21910 Corcelles-les-Cîteaux (FR)
(72) Inventeur: RABEC, Dominique, F-76930 Octeville s/Mer (FR)
(74) Mandataire: Eltzer, Thomas
(86) Numéro de dépôt international: PCT/FR2008/051335
(87) Numéro de publication internationale: WO 2009/019382

(56) Documents cités:
- EP-A- 1 717 170
- DE-A1- 3 118 464
- DE-A1- 3 825 069
- FR-A- 2 884 507
- GB-A- 798 944
- GB-A- 2 052 420
- US-A- 3 037 610
- US-A- 3 352 403
- US-A- 4 093 063
- US-A- 5 147 027
- US-A1- 2003 111 321
- US-A1- 2004 050 663
- US-B1- 6 446 785

## Description

La présente invention concerne un dispositif de formation de lots d'objets, sensiblement parallélépipédiques, circulant en continu sur une bande de convoyage pour alimenter, par exemple, une fardeleuse.

Plus précisément, l'invention porte sur la formation de lots d'objets sensiblement parallélépipédiques, tels que des briques de lait ou de jus de fruits, en vue de leur emballage par une fardeleuse du type de celle décrite dans le document FR 2847242, par exemple.

L'alimentation de cette fardeleuse doit se faire avec une précision extrême, sans faute car, après ce conditionnement, les paquets sont palettisés et dirigés vers leur lieu de vente. Le moindre incident peut avoir des répercussions sur une bonne partie des lots voire de la palette.

Or les produits du genre briques de jus de fruit ou autres sont relativement délicats à manipuler et ceci d'autant plus que, parfois, ils peuvent comporter une paille qui est directement collée sur une face latérale du produit.

Dans ce domaine qui concerne le fractionnement d'une file de produits, le document DE 3 118 464 décrit un dispositif convoyeur qui permet de séparer des barquettes qui sont en file indienne, à touche-touche.

Ce dispositif de séparation comprend un couloir de passage formé de deux volets qui sont articulés pour réaliser une déviation temporaire de la barquette qui passe et pour l'orienter vers une butée disposée sur le côté du chemin de convoyage, laquelle butée immobilise la barquette en question pendant un temps suffisant pour réaliser un espace entre la barquette immobilisée et la barquette précédente.

Un tel dispositif peut fonctionner à des cadences relativement élevées pour séparer des barquettes mais il n'est pas adapté pour former, à grande cadence, des lots constitués de produits du genre briques.

Le document EP 1717170 décrit une installation de palettisation qui comprend un dispositif de préparation de lots avec des paquets qui arrivent en file indienne.

La tête de file est prise en charge par une butée et, dès que le nombre de paquets formant le lot est atteint, la file est stoppée par un système de pinces. Pendant cet arrêt de la file, le lot est déplacé transversalement vers une table de palettisation.

Le caractère séquentiel de ce genre de dispositif ne peut pas s'accommoder des cadences très rapides qui sont celles que l'on rencontre dans les installations de préparation de lots constitués de produits du genre briques.

Le document GB 2052420 décrit un dispositif de préparation de lots d'objets selon le préambule de la revendication 1.

La présente invention se propose de résoudre les problèmes de conditionnement par lots de ces objets sensiblement parallélépipédiques du type briques de lait, de jus de fruits ou autres; elle propose un dispositif pour sa mise en oeuvre qui permettent de fonctionner à grande cadence avec un maximum de sécurité et d'efficacité.

La spécification divulgue un procédé, qui n'est pas revendiqué, de formation de lots d'objets sensiblement parallélépipédiques circulant alignés et accolés les uns contre les autres, en file indienne, lesquels objets, d'une longueur ℓ, sont transportés par une bande de convoyage qui avance à une vitesse longitudinale Va, lequel procédé consiste :
- à immobiliser ladite file indienne, sur sa longueur, dans un couloir, par le biais de moyens d'arrêt qui agissent de façon séquentielle, pour créer un espace entre deux objets consécutifs et pour isoler, en aval dudit espace, un groupe d'objets qui forme le lot avec son nombre d'objets tel que programmé,
- à insérer, dans l'espace ainsi créé, un premier taquet dont la vitesse longitudinale d'avancement Vt est inférieure à Va,
- à libérer ladite file immobilisée et à la faire prendre en charge, au niveau de son objet de tête, par ledit premier taquet,
- à déclencher une nouvelle immobilisation temporaire de ladite file, en vue d'insérer un second taquet dans le nouvel espace ainsi créé, lorsque la distance parcourue par le premier taquet, mesurée à partir de l'extrémité desdits moyens d'arrêt, correspond au moins à la longueur L du lot d'objets,
- à libérer la file retenue par lesdits moyens d'arrêt pour la faire prendre en charge par ledit second taquet,
- à libérer le lot retenu par ledit premier taquet et, ainsi de suite, à déclencher à nouveau un arrêt de la file...etc. Le

Le procédé d'immobilisation de la file consiste:
- à déformer le couloir de façon à réduire sa section d'entrée pour bloquer la file par coincement du ou des objets qui sont dans ladite entrée,
- à appliquer, sur les faces latérales desdits objets qui sont dans ledit couloir, une pression dont l'intensité est dégressive entre ladite entrée dudit couloir et son extrémité aval pour réduire la pression de contact entre lesdits objets,
- à placer, en bout dudit couloir, un arrêt de sécurité en forme de butée pour retenir l'objet aval qui est en tête de file. Cette particularité permet d'éviter un coincement de l'objet aval, qui constitue la tête de file, contre la butée de sécurité et permet aussi d'utiliser des moyens simples, détaillés ci-après, pour déformer le couloir dans lequel circulent les objets.

Selon une disposition préférentielle, l'espace créé entre deux objets consécutifs, lorsque la file est arrêtée, a une longueur qui est de l'ordre de la moitié de la longueur ℓ desdits objets.

La différence de vitesse entre la bande de convoyage des objets et les taquets de prise en charge des différents lots d'objets est de l'ordre de 10 à 15 %, avec une vitesse plus faible pour lesdits taquets de façon à créer un intervalle entre les lots avant de les présenter à la fardeleuse, par exemple.

Selon une autre disposition, les taquets prennent en charge et accompagnent le lot d'objets sur une distance qui est de l'ordre de 1,5 fois la longueur L dudit lot d'objets.

L'invention concerne un dispositif, conformément à la revendication 1.

Selon l'invention, les moyens d'immobilisation de la file sont constitués:
- de volets disposés en vis-à-vis qui forment un couloir dans lequel passent les objets: - un volet déviateur et - un volet réactif, chaque volet étant mobile autour d'un axe vertical qui est situé à sa partie amont, respectivement,
- de moyens pour faire pivoter ledit volet déviateur dans la direction de l'autre volet afin de déformer ledit couloir,
- de moyens pour contrarier le mouvement de réaction du volet réactif lorsqu'il est poussé, par l'intermédiaire des objets, par le volet déviateur, lesquels moyens sont mis en oeuvre pour réaliser un serrage, ou pincement, rapide et efficace de la file en vue d'une immobilisation quasi instantanée.

Toujours selon l'invention, les axes des volets sont décalés longitudinalement: l'axe du volet réactif se situant en aval de l'axe du volet déviateur, à une distance qui est comprise entre la longueur ℓ et la moitié de cette longueur des objets, ladite distance étant mesurée sur l'axe longitudinal de défilement des objets.

Cette disposition constructive permet de déformer le couloir en réduisant la largeur de son entrée et cette déformation est réalisée avec un effort relativement modeste grâce à l'effet de levier donné audit volet déviateur par la position de son axe d'articulation.

La déformation du couloir forme une sorte de goulot d'étranglement et permet de bloquer la file non pas au niveau de son extrémité, comme c'est généralement le cas, mais bien en amont de sa tête de file; de ce fait, la pression de contact entre les objets se libère et l'objet de tête peut même être quasiment libre.

Selon une autre disposition de l'invention, le volet réactif s'escamote, sous l'effet du volet déviateur, par l'intermédiaire des objets disposés entre les deux, lequel volet réactif, en s'escamotant, dégage un arrêt de sécurité en forme de butée susceptible de retenir temporairement l'objet amont qui constitue la tête de la file.

Selon une disposition préférentielle les taquets sont régulièrement répartis et portés par une chaîne sans fin motorisée dont le brin actif est, d'une part, parallèle au sens d'avancement des objets et, d'autre part, disposé en aval du volet déviateur, lesquels taquets sont espacés d'un pas P qui est sensiblement supérieur à la longueur L du lot d'objets, de l'ordre de quelques millimètres, compris entre 1 et 5 mm selon la nature des objets.

Selon une disposition préférentielle de l'invention, le taquet est associé, sur la chaîne sans fin, à un organe de manoeuvre du volet déviateur, lequel organe de manoeuvre coopère avec un aménagement en forme de came disposé sur ledit volet déviateur de façon à le faire pivoter au fur et à mesure que le taquet s'approche de ce dernier, l'ensemble constitué par le galet et la came permet de coordonner l'arrêt de la file et le passage du taquet en vue de l'insertion dudit taquet dans l'espace créé entre deux objets par l'immobilisation de ladite file.

Toujours selon l'invention, le volet réactif est contrarié par un moyen du type ressort, lequel volet réactif procède à la remise en place automatique du volet déviateur, grâce audit ressort, par l'intermédiaire des objets qui circulent entre les deux, lorsque le galet quitte la came dudit volet déviateur.

Selon une autre disposition de l'invention, la longueur du volet déviateur est, par exemple, de l'ordre de la longueur de trois à cinq objets.

Selon une disposition préférentielle de l'invention, les volets déviateur et réactif et la butée aval sont disposés sur une même structure dont la position est réglable longitudinalement par rapport au bâti général pour s'adapter à des changements de formats des objets et/ou des lots à former, laquelle structure est calée longitudinalement par rapport à la position de la roue de guidage amont de la chaîne sans fin qui porte les galets et les taquets, ladite position de cette roue amont étant elle-même réglable longitudinalement pour permettre l'accueil de différents modèles de chaînes dont lesdits taquets et galets sont répartis selon un pas adapté à la longueur L desdits lots à préparer.

La présente invention est maintenant décrite à l'aide d'un exemple uniquement illustratif et nullement limitatif de la portée de la présente invention, à l'aide des illustrations suivantes, dans lesquelles :
- la figure 1 est une vue en perspective du dispositif selon l'invention pour la formation de lots d'objets circulant de manière continue les uns contre les autres sur une bande de convoyage ;
- les figures 2 et 3 sont deux vues agrandies partielles de l'ensemble support du couloir de passage des objets à la sortie duquel sont formés les lots d'objets ;
- les figures 4 et 5 sont deux vues de dessus illustrant respectivement le dispositif selon l'invention dans une position de inactive et dans une position d'arrêt du flux d'objets en vue de la formation d'un lot d'objets ;
- la figure 6 est une vue en perspective de dessous de l'ensemble à chaîne sans fin du dispositif selon l'invention,
- la figure 7 représente, sous la forme d'un schéma fonctionnel, les éléments essentiels du dispositif de préparation de lots,
- les figures 8 à 12 montrent différentes étapes de la préparation de lots selon le procédé de l'invention.

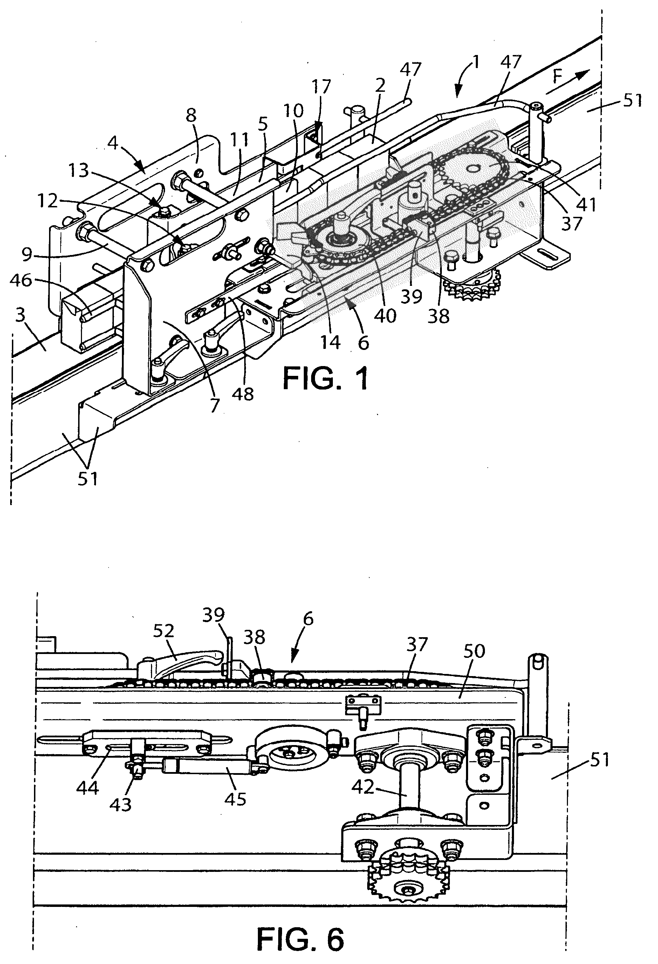

La figure 1 représente une vue en perspective du dispositif 1 selon l'invention permettant la formation de lots d'objets 2 circulant alignés de manière continue les uns contre les autres, en file indienne, sur une bande 3 de convoyage. Les objets 2 sont donc alimentés, par des moyens de type connus en soi, en amont sur la bande 3 de convoyage de manière continue et accolés les uns à la suite des autres, en file indienne.

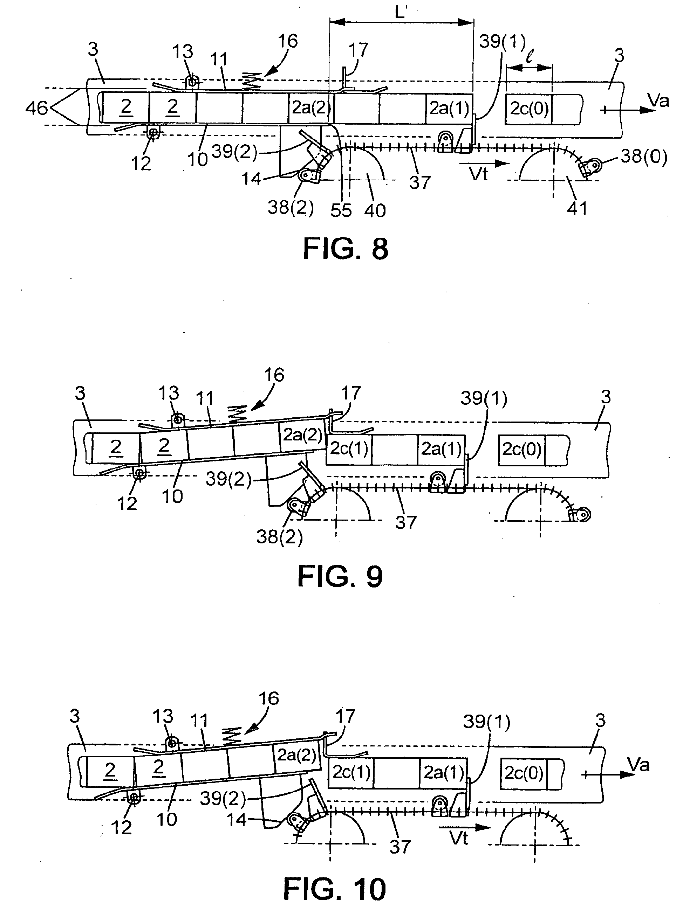

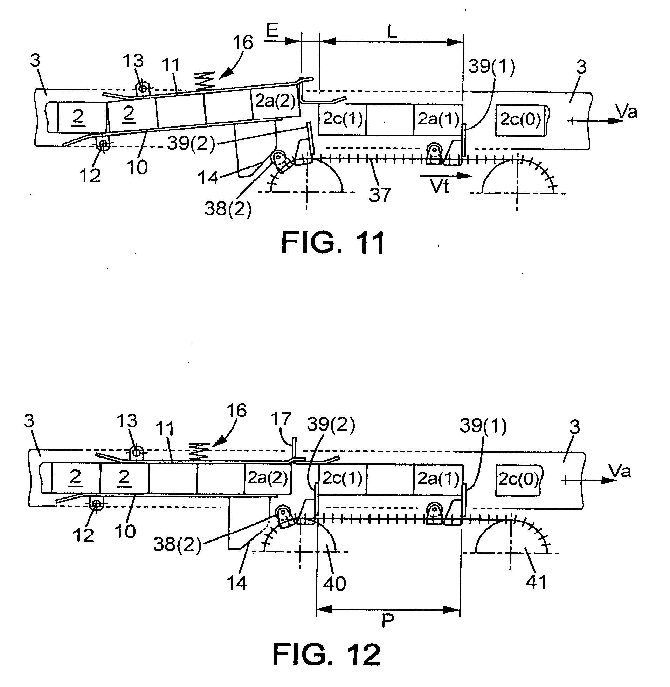

Les objets 2 à mettre en lots, du genre brique alimentaire, présentent une forme parallélépipédique; ces objets 2 ont une longueur ℓ, comme montré figure 8, et le lot formé à partir de ces objets 2 a une longueur L, comme montré figure 11.

Le dispositif 1 selon l'invention comprend - un ensemble 4 support dans lequel est formé un couloir 5 de passage des objets 2 et - un ensemble 6 à chaîne sans fin, dont la fonctionnalité sera expliquée ultérieurement.

L'ensemble 4 support est constitué d'une première paroi 7 et d'une seconde paroi 8, parallèles entre elles, disposées de part et d'autre de la bande 3 de convoyage et reliées entre elles par une pluralité de traverses 9, prévues sensiblement transversales à la direction de défilement de la bande 3 de convoyage et correspondant à la direction de la flèche F telle qu'illustrée sur la figure 1.

Sur la face interne de la paroi 7 est fixée une plaque latérale en forme de volet 10 pivotant (ou vantail latéral), dont le pivotement est commandé par l'ensemble 6 à chaîne sans fin, tandis que sur la face interne de la paroi 8, en vis-à-vis du volet 10, est également fixée une plaque latérale en forme de volet 11 préférentiellement prévu également pivotant.

Plus précisément, afin de permettre le blocage du flux continu des objets 2 circulant sur la bande 3 de convoyage et dans le couloir 5, il est procédé à une déformation dudit couloir 5 par déplacement, préférentiellement par pivotement du volet 10 latéral pivotant fixé sur la première paroi 7, ce qui entraîne le déplacement des objets sur la bande 3 de convoyage qui viennent alors en appui sur le volet 11 latéral fixé sur la deuxième paroi 8, provoquant ainsi le blocage des objets logés entre les deux volets 10, 11 latéraux.

Le volet 10 constitue le volet déviateur, c'est-à-dire le volet qui écarte les objets 2 transversalement, et le volet 11 constitue le volet réactif en ce sens qu'il est manoeuvré par ledit volet déviateur par l'intermédiaire desdits objets 2 et que, comme détaillé plus loin, c'est lui, le volet 11 réactif, qui remet ledit volet 10 déviateur en position inactive.

Chaque volet 10, 11 latéral est fixé sur la surface interne de la paroi 7, 8 respective par l'intermédiaire de moyens de fixation qui sont constitués d'axes 12, 13, respectivement. Ces axes 12, 13, sont positionnés en amont des volets 10, 11, respectivement, lesquels volets pivotent transversalement par rapport à la direction F de défilement des objets 2 sur la bande 3 de convoyage.

Afin de faciliter le blocage de la file, l'entrée du couloir 5 subit un rétrécissement, c'est-à-dire une diminution de sa largeur par un rapprochement des deux volets 10, 11 latéraux lors de leur pivotement. Ce rétrécissement est obtenu par un décalage des axes 12, 13, de pivotement des deux volets 10, 11 latéraux, l'un par rapport à l'autre dans la direction F de défilement des objets 2 sur la bande 3 de convoyage, c'est-à-dire que les deux axes de pivotement n'appartiennent pas à un même plan qui est transversal à la direction F de défilement.

L'axe 12 du volet 10 déviateur se situe en amont de l'axe 13 du volet 11 réactif, à une distance qui est, par exemple, comprise entre la longueur ℓ et la moitié de cette longueur ℓ des objets 2, ladite distance étant mesurée sur l'axe longitudinal de défilement desdits objets. Cette disposition constructive permet, avec un effort relativement modeste exercé sur le volet 10 déviateur, d'exercer une forte pression sur le ou les objets 2 qui sont disposés au niveau de l'entrée des deux volets 10, 11, grâce à l'effet de levier procuré par ledit volet 10 déviateur du fait de la position de son axe 12 d'articulation.

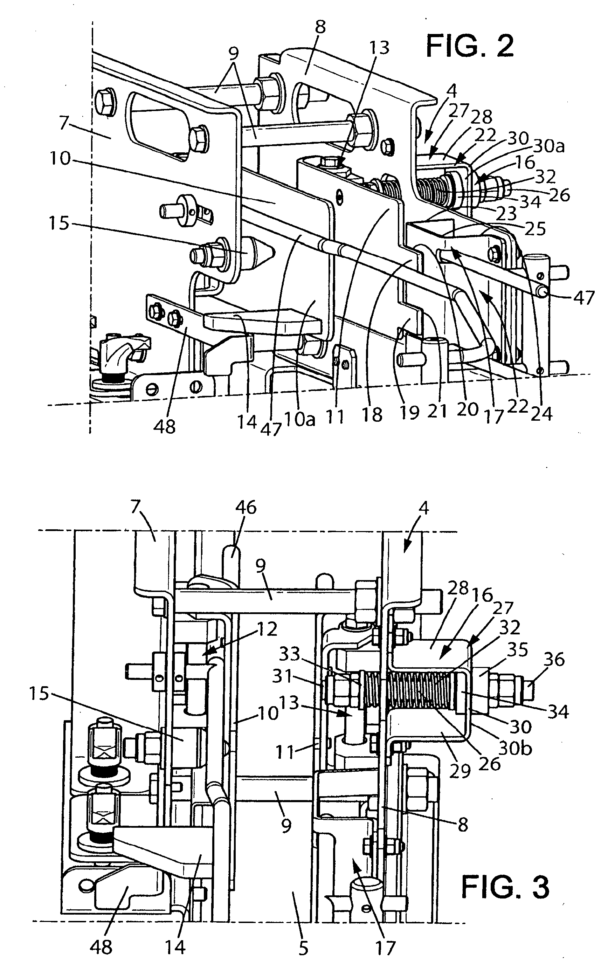

Afin de provoquer le pivotement du volet 10 déviateur, il est prévu une came 14 de commande du pivotement dudit volet 10 qui est fixée sur sa surface 10a externe (voir figure 2), c'est-à-dire sur sa surface opposée à la surface apte à venir en contact avec les objets 2 défilant sur la bande 3 de convoyage.

La position inactive du volet 10 déviateur est établie par une butée 15 qui est fixée sur la paroi 7 comme représentée sur les figures 2 à 5. Quand la came 14 n'est pas commandée et qu'un flux d'objets 2 défile sur la bande 3 de convoyage, le volet 10 est alors sensiblement parallèle à la direction F de défilement des objets 2, lesdits objets 2 lors de leur passage dans le couloir 5, ayant tendance à pousser vers l'extérieur les volets 10, 11 latéraux, et donc à venir plaquer ledit volet 10 contre la butée 15.

La butée 15 est constituée d'une matière plastique ou caoutchouteuse, sur laquelle vient s'appuyer le volet 10 déviateur.

Le volet 11 réactif fixé sur la deuxième paroi 8 de l'ensemble support 4 est, quant à lui, en appui contre des moyens 16 ressorts aptes à exercer une force de poussée de manière continue sur ledit volet 11, c'est-à-dire aptes à exercer une force de poussée sensiblement transversale à la direction F de défilement des objets 2 et tendant à plaquer ledit volet 11 contre les objets 2 défilant sur la bande 3 de convoyage.

Ainsi, dans le mode de réalisation illustré sur les différentes figures, la came 14 a tendance à entraîner le pivotement du volet 10 déviateur dans le sens inverse des aiguilles d'une montre (sens antihoraire), tandis que les moyens 16 ressorts ont tendance à entraîner le pivotement du volet 11 réactif dans le sens des aiguilles d'une montre (sens horaire), la came 14 et les moyens 16 ressorts étant respectivement prévus en aval des axes de pivotement des deux volets 10, 11 fixés respectivement sur les parois 7, 8 de l'ensemble 4 support.

Dans la suite de la description, il est entendu par élément « amont », un élément situé ou dirigé en amont de la bande 3 de convoyage et par élément « aval » un élément situé ou dirigé en aval de la bande 3 de convoyage. Autrement dit, la bande 3 de convoyage défile d'un élément « amont » vers un élément « aval ».

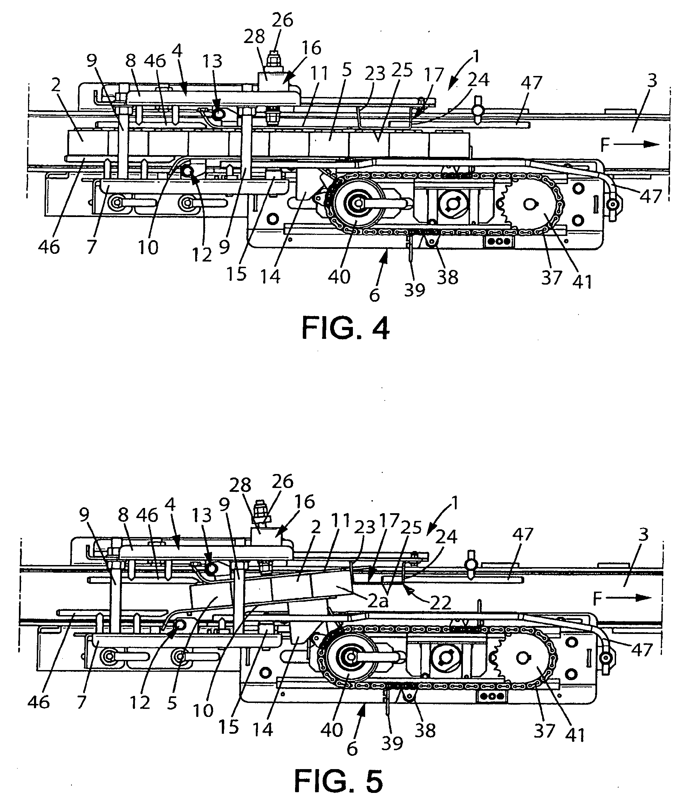

De manière supplémentaire, le dispositif 1 selon l'invention peut présenter un organe 17 de retenue du flux d'objets 2, faisant office de butée, contre lequel est susceptible de venir en appui l'objet 2a qui est en tête de file, comme cela est représenté sur la figure 5.

Préférentiellement, l'organe 17 de retenue du flux d'objets 2 qui est bloqué entre les volets 10, 11, est fixé sur la même paroi 8 que le volet 11 subissant la force de poussée des moyens 16 ressorts.

De manière préférentielle, les volets 10, 11 bloquent le flux d'objets 2 dans le couloir 5 sans que l'objet 2a bloqué le plus en aval vienne en butée contre l'organe 17 de retenue du flux; les volets 10, 11, bloquent la file à l'entrée du couloir 5 grâce à la restriction de la largeur de cette entrée.

Toutefois, en cas de défaillance du serrage des objets 2 dans le couloir 5, du fait, par exemple, d'une variation dimensionnelle de l'objet, il est possible que l'objet 2a le plus aval ne soit pas suffisamment serré entre les deux volets 10, 11 et continue à avancer de par le mouvement de défilement de la bande 3 de convoyage jusqu'à l'organe de retenue 17.

Par ailleurs, afin de faciliter le retour sur la bande 3 de convoyage de l'objet en aval venu en butée sur l'organe 17 de retenue, il est prévu que le volet 11 présente à son extrémité aval au moins une dent 18, 19, comme représentée figure 2, apte à traverser des ouvertures 20, 21 formées dans l'organe 17 de retenue et à venir déplacer l'objet 2a le plus en aval qui serait venu en butée contre l'organe 17 de retenue du flux.

Plus précisément, l'organe 17 de retenue se présente sous la forme d'un caisson en forme de U constitué, d'une part, de deux parois 23, 24, à savoir une paroi 23 transversale amont et une paroi 24 transversale aval, préférentiellement fixées par leur extrémité libre sur la deuxième paroi 8 de l'ensemble 4 support, et, d'autre part, d'une paroi 25 de fond, prévue sensiblement parallèle à la direction F de défilement. Les objets 2 non bloqués par les volets 10, 11, mais tout de même déviés, viennent alors en butée contre une des deux parois 23, 24 transversales (voir figure 5).

Les ouvertures 20, 21 prévues dans le caisson 22 sont avantageusement formées dans la paroi 23 transversale amont, contre laquelle est susceptible de venir en butée un objet 2, ainsi que dans la paroi 25 pour que les dents 18, 19 soient sensiblement dans le même plan que ladite paroi 25. Lors du pivotement des volets 10, 11, les dents 18, 19 viennent alors se déplacer dans la partie de l'ouverture 20, 21, formée dans la paroi 23 transversale amont.

Une forme possible d'un mode de réalisation des moyens 16 ressorts est illustrée sur la figure 3.

Les moyens 16 ressorts sont constitués d'une tige 26 traversant la paroi 8 ainsi qu'un caisson 27, également fixé sur la face externe de ladite paroi 8 (c'est-à-dire la face non dirigée vers le flux d'objets 2 défilant sur la bande 3 de convoyage), le caisson 27 étant en forme générale de U, avec deux parois 28, 29 formant les branches verticales du U et dont les extrémités sont directement fixées sur la surface externe de la paroi 8 et d'une paroi 30 de fond également traversée par la tige 26.

La tige 26 présente une première extrémité 31 d'appui apte à venir en contact et en poussée contre la surface externe du volet 11 fixé sur la paroi 8.

Un ressort 32 est prévu enroulé autour de la tige 26; ce ressort 32 prend appui, d'un côté, sur une bague 33 qui est disposée au niveau de l'extrémité 31 de la tige 26 et, de l'autre côté, sur une rondelle 34 qui est fixée sur la surface 30a interne de la paroi 30 de fond du caisson 27. Cette tige 26 traverse la paroi 30 au milieu de la rondelle 34 d'appui et une bague 35, faisant office de butée, est fixée sur l'extrémité de la tige 26; cette bague 35 est en butée sur la surface externe 30b de la paroi 30 de fond, quand le volet 11 est sensiblement parallèle à la direction F de défilement de la bande 3 de convoyage et elle s'en écarte lorsque ledit volet 11 est pivoté pour bloquer la file des objets 2.

De par cette forme de réalisation des moyens 16 ressorts la tige 26 est constamment soumise à une tension tendant à augmenter l'écartement entre la paroi 30 de fond et l'extrémité de la tige 26 en appui contre le volet 11. Le ressort 32 se contracte lorsque ledit volet 11 est déplacé du fait du pivotement du volet 10 déviateur par l'intermédiaire des objets 2 qui sont placés entre les deux. Le mouvement de retour du volet 10 est provoqué par la détente du ressort 32 qui pousse le volet 11 et, par l'intermédiaire des objets 2, ledit volet 10.

Afin de commander le pivotement du volet 10 déviateur par l'intermédiaire de la came 14 fixée dessus, il est prévu un ensemble 6 à chaîne sans fin, préférentiellement prévu amovible et déplaçable tout comme l'ensemble 4 support. Cet ensemble 6 comprend une chaîne 37 sans fin sur laquelle est fixée au moins un galet 38 de roulement apte à coopérer sur le chemin de came formé par la came 14 fixée sur le volet 10, ainsi qu'un taquet 39, lequel taquet, par exemple sous la forme d'une plaquette, est apte à s'insérer dans l'intervalle entre deux objets 2 circulant sur la bande 3 de convoyage en sortie du couloir 5 formé par les deux volets 10, 11. Lorsqu'il est inséré dans l'espace E formé entre deux objets, le taquet 39 est apte à servir d'appui à l'objet 2a le plus en aval du flux d'objets 2 qui a été bloqué par les volets 10, 11 dans leur position pivotée (voir figure 5).

La chaîne 37 sans fin est engrenée sur deux roues 40, 41 dentées; l'une au moins des deux roues 40, 41 est apte à être déplacée selon une direction sensiblement parallèle à la direction F de défilement des objets 2 sur la bande 3 de convoyage.

Cette chaîne 37 sans fin est placée latéralement par rapport à la bande 3 de convoyage de façon à permettre l'insertion des taquets 39, fixés sur la chaîne 37, en aval de l'objet 2a le plus en aval du flux d'objets 2 qui est bloqué par les volets 10, 11, lors du retour de ces objets 2, 2a sur la bande 3 de convoyage.

Plus précisément, afin de former des lots d'objets 2 espacés les uns des autres à partir d'un flux continu d'objets 2 accolés les uns contre les autres circulant sur une bande 3 de convoyage à défilement continu, il est tout d'abord procédé au passage des objets 2 dans le couloir 5 en sortie duquel des lots d'objets 2 sont formés.

Lors de ce passage des objets 2 dans le couloir 5, il est ensuite procédé au déplacement, préférentiellement par pivotement, d'au moins un volet 10 en direction du flux d'objets 2 défilant sur la bande 3 de convoyage et en direction de l'autre volet 11. Préférentiellement, les deux volets 10, 11 étant prévus pivotants, mais avec des axes de pivotement transversalement décalés l'un par rapport à l'autre, le pivotement du volet 10 en direction de l'autre volet 11, provoque la déviation transversale du flux d'objets 2 par rapport à la direction F de défilement et, par réaction, le pivotement dudit volet 11, par l'intermédiaire desdits objets 2.

Du fait du décalage transversal des axes de pivotement, les volets 10, 11 ne restent plus parallèles l'un par rapport à l'autre lors de ce mouvement de pivotement et ils ont tendance à se rapprocher et à exercer une force de pression de part et d'autre des objets 2 ce qui a pour effet de retenir et de bloquer ces objets 2 entre les volets 10, 11, et ceci malgré le mouvement de défilement de la bande 3 de convoyage.

Le volet 10, en se rapprochant du volet 11, se rapproche aussi de l'axe 13 de ce dernier ce qui a pour effet de provoquer un rétrécissement à l'entrée du couloir 5 formé par les deux volets 10 et 11.

Cette fermeture à l'entrée du couloir 5 permet modifier la pression qui s'exerce normalement entre les différents objets 2 en file indienne; le blocage de la file à l'entrée du couloir 5 permet de libérer la pression entre les objets qui sont dans ledit couloir. De ce fait, l'objet 2a qui est en tête dans le couloir 5, n'est pas pressé contre la butée 17 par les autres objets de sorte que, lorsque les volets 10 et 11 reviennent en position inactive, sous l'effet des moyens 16 ressorts, l'objet 2a se replace sans aucune difficulté sur le chemin longitudinal de convoyage.

Pendant le temps du blocage du flux d'objets 2, il est alors possible de procéder à l'insertion d'un taquet 39 sur la trajectoire de défilement des objets 2 qui sont sur la bande 2 de convoyage en sortie du couloir 5, lequel taquet 39 s'insère en aval de l'objet 2a le plus en aval des objets 2 bloqués par les volets 10, 11, dans le couloir 5.

Du fait que les objets 2 convoyés sont préférentiellement parallélépipédiques, il est en effet nécessaire de prévoir des espaces dans le flux continu d'objets 2 afin de permettre l'insertion d'un tel taquet 39 et, par voie de conséquence, permettre la formation de lots d'objets 39, chaque lot étant constitué du nombre d'objets 2 placés entre deux taquets 39 qui sont insérés successivement dans le flux d'objets 2 en sortie du couloir 5. Les taquets 39 sont espacés d'un pas P qui est sensiblement supérieur à la longueur L du lot d'objets, de l'ordre de quelques millimètres, compris entre 1 et 5 mm selon la nature des objets.

Ensuite, afin de permettre le relâchement des objets 2 bloqués entre les deux volets 10, 11, le volet 10 pivoté revient dans sa position initiale, c'est-à-dire dans une position sensiblement parallèle à la direction de défilement de la bande 3 de convoyage. Dans le cas où les deux volets 10, 11 sont prévus pivotants, les moyens 16 ressorts permettent de faciliter le retour en place desdits volets 10, 11, lesdits moyens 16 ressorts exerçant une force de poussée dirigée sensiblement vers l'autre des deux volets 10, 11 et vers les objets 2 convoyés.

Du fait du retour à une position non pivotée des volets 10, 11 (ceux-ci étant alors tous deux sensiblement parallèles à la direction F de défilement et n'ayant plus d'influence sur l'avancement du flux d'objets 2 sur la bande 3 de convoyage), les objets 2 relâchés sur la bande 3 de convoyage se déplacent jusqu'à la mise en contact de l'objet 2a le plus en aval des objets 2 relâchés sur le taquet 39.

Afin de permettre la formation d'un lot d'objets 2 venant en butée sur le taquet 39, il est procédé à l'avancement du taquet 39 selon une direction longitudinale, confondue avec la direction F de défilement des objets 2.

Ensuite, comme détaillé plus loin en relation avec les figures 8 à 12, il est relâché en sortie du couloir 5 un nombre d'objets 2 correspondant au nombre d'objets 2 devant composer le lot d'objets 2 à former, l'objet 2a le plus en aval du flux restant en butée contre le taquet 39 et les autres objets 2 en amont venant en butée contre celui-ci les uns à la suite des autres.

La vitesse Vt d'avancement du taquet 39 est, pour ce faire, légèrement inférieure à la vitesse Va de défilement de la bande 3 de convoyage.

Lorsque la distance entre le taquet 39 et l'extrémité du volet 10 correspond à la longueur L du lot d'objets 2 prévue, le galet 39, qui est associé au taquet 39 suivant, entre en contact avec la came 14 du volet 10 déviateur pour arrêter une nouvelle fois la file d'objets 2.

Le cycle recommence, de façon séquentielle; de nouveau le volet 10 déviateur pivote, ce qui permet de former un autre lot d'objets 2 qui est retenu à son tour par le taquet 39, lequel lot comprend un nombre d'objets 2 qui correspond au nombre d'objets relâchés sur la bande 3 de convoyage entre deux étapes successives de blocage de la file par les volets 10, 11.

De manière préférentielle, l'étape de déplacement préférentiellement par pivotement du volet 10 déviateur découle de la mise en contact du galet 38 sur la came 14 fixée sur le volet 10 déviateur, et, de manière plus précise, l'étape de mise en contact du galet 38 ainsi que l'étape d'insertion d'un taquet 39 sur la trajectoire de défilement F des objets 2, en sortie du couloir 5, sont réalisées à l'aide d'une étape d'avancement de la chaîne 37 sans fin sur laquelle sont fixés ledit galet 38 et ledit taquet 39.

Par ailleurs, et comme cela est représenté plus précisément selon une vue de dessous en perspective, figure 6, l'ensemble 6 à chaîne sans fin 37 est installé sur un bâti 50 qui est lui-même solidaire du châssis général 51 du convoyeur, lequel châssis 51 est en fait constitué par les flancs dudit convoyeur.

Il peut être ainsi remarqué que la roue 41 dentée est mise en rotation à l'aide d'un arbre moteur 42 relié à des moyens d'entraînement, de type connu en soi et non représentés sur la figure 6, tandis que l'autre roue 40 dentée est prévue déplaçable pour permettre l'accueil de plusieurs modèles de chaînes 37, chaque chaîne étant adaptée à la dimension des objets 2 et à la longueur des lots à former. La position de la roue 41 est fixe car elle est en relation avec les moyens de groupage de la fardeleuse qui se trouve immédiatement en aval, comme expliqué auparavant.

La roue 40 est montée sur un arbre 43 qui est vertical et apte à se déplacer dans une rainure 44 longitudinale formée dans le bâti 50; sa position est verrouillable par serrage au moyen de la poignée 52. La tension de la chaîne 37 est réglée au moyen d'un vérin 45 du type à gaz, avant l'immobilisation de l'arbre 43 par la poignée 52.

De manière supplémentaire, et afin d'assurer un meilleur guidage des objets dans le couloir ainsi qu'en sortie du couloir, des rails 46, 47 de guidage sont prévus fixés sur les parois 7, 8 aptes à guider les objets 2 sur la bande 3 de convoyage aussi bien en entrée qu'en sortie du couloir 5.

Lorsque le format des objets change, ainsi que la longueur du lot, il faut également régler la position de l'ensemble 4, qui porte les volets 10 et 11, par rapport à l'ensemble 6 à chaîne sans fin. Pour faciliter ce réglage de la position de l'ensemble 4 support par rapport à l'ensemble 6 à chaîne sans fin, il est prévu un organe 48 de positionnement, fixé sur l'ensemble 4 support, permettant de régler l'écartement entre l'ensemble 4 support et l'ensemble 6 à chaîne sans fin.

A titre d'exemple, et comme cela est représenté sur les figures 1 et 2, l'organe 48 de positionnement est une tige allongée dont l'extrémité, à l'équerre, sert de point de repère et coopère avec le galet 38 pour positionner l'ensemble 4 support par rapport à l'ensemble 6 à chaîne sans fin.

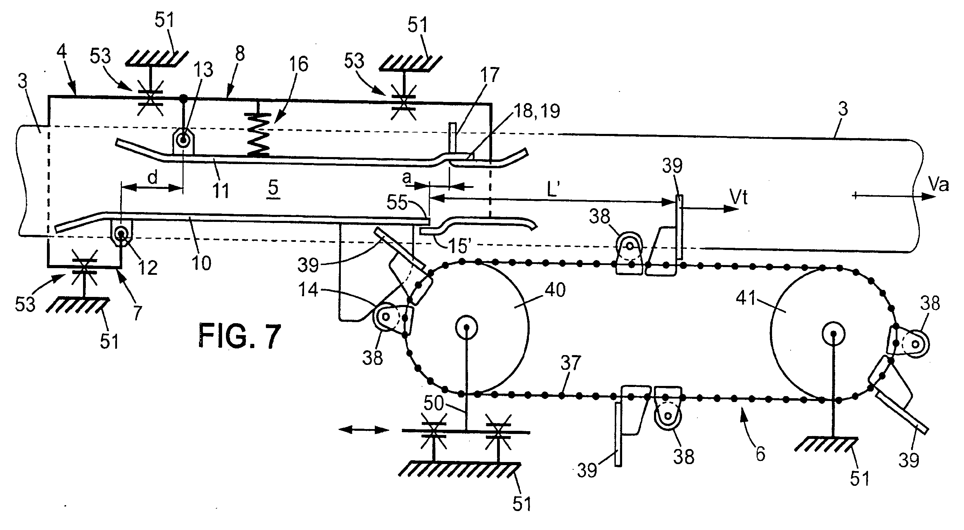

La figure 7 illustre, sous la forme d'un simple schéma fonctionnel, les éléments essentiels du dispositif selon l'invention. On retrouve, rassemblés sur le châssis 51 du convoyeur: l'ensemble 4 support qui se positionne longitudinalement sur la bande 3 dudit convoyeur et l'ensemble 6 à chaîne sans fin qui est positionné latéralement par rapport à ladite bande 3, sensiblement en aval dudit ensemble 4.

Comme expliqué auparavant, l'ensemble 4 est déplaçable longitudinalement par rapport au châssis 51, guidé au moyen de rainures ou glissières 53, pour adapter la position de la came 14 du volet 10 déviateur par rapport à la position des galets 38, laquelle position des galets 38 et des taquets 39 dépend du type d'objets 2 à mettre en lots et elle dépend aussi de la dimension du lot d'objets.

L'ensemble 4 sert de support aux deux volets 10 et 11 qui délimitent le couloir 5 dans lequel s'effectue le blocage de la file d'objets 2. Le volet 10 déviateur est articulé à sa partie amont au moyen d'un axe 12 et le volet 11 réactif est articulé autour d'un axe 13 qui se situe également à sa partie amont, c'est-à-dire à l'entrée du couloir 5. Les deux axes 12 et 13 sont décalés longitudinalement comme indiqué auparavant, d'une par exemple distance d qui est par exemple comprise entre ℓ et 1/2ℓ où ℓ est la longueur des objets 2. De préférence, cette distance d est voisine de 1/2ℓ.

L'extrémité aval 55 du volet 10 est légèrement décalée, dans le sens longitudinal, par rapport à la butée 17; elle se situe en amont de cette butée 17 pour permettre une anticipation du mouvement dudit volet 10 lors du décalage latéral de la tête de la file d'objets 2 et pour éviter de bousculer le dernier objet du lot en préparation. La distance a qui sépare l'extrémité 55 aval du volet 10 et la butée 17 est comprise entre ½ et 1/4ℓ.

Le déclenchement du mouvement du volet 10 résulte du contact entre le galet 38 et la came 14 dudit volet; la levée de ladite came 14 est effective lorsque la distance L'entre le taquet 39 et l'extrémité 55 du volet 10 correspond sensiblement à la longueur L du lot d'objets à former.

Les figures suivantes 8 à 12 montrent l'enchaînement des mouvements qui permettent d'établir un espace dans la file, entre deux objets consécutifs, et la formation d'un lot d'objets puis son accompagnement vers la fardeleuse, par exemple.

La figure 8 montre la file d'objets 2 qui avance avec la bande 3 de convoyage à une vitesse Va, retenue par le taquet 39(1) qui vient de s'insérer entre l'objet 2a(1) en tête de file et le dernier objet 2 du lot préparé. Sur cette figure 8, le taquet 39(1) se situe à une distance L'de l'extrémité 55 aval du volet 10, laquelle distance correspond à la longueur L du lot d'objet à préparer.

Lorsque le taquet 39(1) atteint cette distance L', le galet 38(2) entre en contact avec la came 14 du volet 10 déviateur et fait pivoter ce dernier très rapidement. Ce pivotement du volet, figure 9, a pour effet de dévier les objets 2 qui sont dans le couloir 5 délimité par ledit volet 10 et le volet 11, du côté de ce dernier, et de mettre l'objet 2a(2) de la tête de file en face de la butée 17.

Le pivotement du volet 10 a également eu comme effet de restreindre la largeur de l'entrée du couloir 5 et de bloquer la file en amont de ladite entrée.

Le blocage et l'arrêt de la file est quasi instantané au niveau de l'entrée du couloir 5 et il se produit une sorte de détente des produits qui sont dans ledit couloir 5 du fait de la distance a qui sépare l'extrémité 55 du volet 10 et la butée 17. Cette distance a permet aux objets qui sont dans le couloir 5 et qui sont serrés entre les volets 10 et 11, de décélérer et de s'arrêter.

Le blocage de la file à l'entrée du couloir 5 permet de libérer la pression de contact entre les objets 2 qui sont dans ledit couloir 5 et, en particulier, d'éviter que l'objet 2a(2) de tête soit en appui avec une forte pression sur la butée 17. Une pression trop importante entre l'objet 2a(2) et la butée pourrait introduire un frottement exagéré entre les deux avec une dégradation possible dudit objet et demander un effort important pour remettre les objets déviés sur l'axe longitudinal de la bande 3 de convoyage. Le retour des volets 10 et 11 en position inactive s'effectue par les moyens 16 ressorts, comme détaillé plus loin.

Le pivotement du volet 10 permet aussi le passage du taquet 38(2) devant ledit volet 10 et, comme visible sur la figure 10 suivante, il permet sa mise en place derrière le lot préparé auparavant, en attendant de s'insérer entre l'objet 2a(2) et le dernier objet 2c(1) du lot précédent.

Pendant le blocage de la file, la bande 3 de convoyage continue à avancer à une vitesse Va et elle emmène le lot de trois objets qui sont en amont de la butée 17, figure 10. Ce nouveau lot est pris en charge par le taquet 38(1) dont la vitesse de défilement longitudinal Vt est sensiblement inférieure à Va, de l'ordre de 10 à 15%, par exemple.

Le taquet 39(1) continue à avancer en contrôlant le mouvement du lot préparé et l'espace E entre les objets 2c(1) et 2a(2) devient suffisant, figure 11, pour permettre l'insertion sans risque du taquet suivant 39(2) dans ledit espace. Cet espace E a une valeur de l'ordre de ½ à 1/4ℓ. Dans le même temps, le galet 38(2) quitte la came 14 et le volet 10 revient en position inactive en appui sur la butée 15' comme illustré figure 7. Le retour du volet 10 s'effectue automatiquement sous l'effet de la pression exercée par l'intermédiaire des objets 2 qui sont dans le couloir et qui sont réalignés par le volet 11, lui-même sollicité par les moyens 16 ressorts, figure 12.

Le lot nouvellement préparé est encadré par les taquets 39(1) et 39(2) et il est maintenu à la vitesse Vt de défilement desdits taquets ce qui permet de faire évoluer de façon croissante l'écart entre deux lots successifs grâce à la différence de vitesse entre la bande 3 de convoyage et la chaîne 37 qui porte lesdits taquets. Les taquets accompagnent le lot préparé sur une distance qui est de l'ordre de 1,5 fois la longueur L dudit lot, par exemple.

Lorsque les volets 10 et 11 sont revenus en position inactive, la file est libérée et son objet 2a(2) de tête rattrape le taquet 39(2) qui vient de s'insérer, et le cycle reprend comme décrit plus haut, à partir de la figure 8.

## Revendications

1. - Dispositif de formation de lots à partir d'objets (2) qui circulent en file indienne, accolés les uns aux autres, transportés par la bande (3) sans fin d'un convoyeur, lequel dispositif comprend des moyens pour immobiliser ladite file afin d'établir un espace E entre deux objets consécutifs et, des moyens en forme de taquets (39), aptes à s'insérer dans ledit espace E, **caractérisé en ce que**
les moyens d'immobilisation de la file sont constitués de volets (10, 11), disposés en vis-à-vis pour former un couloir (5), l'un des volets (10), constitue le volet (10) déviateur et l'autre volet (11), constitue le volet (11) réactif, chaque volet étant mobile autour d'un axe vertical qui est situé à la partie amont de chacun d'eux,
les moyens d'immobilisation de la file sont également constitués - de moyen pour faire pivoter ledit volet (10) déviateur dans la direction dudit volet (11) réactif, et - de moyens (16) ressorts pour contrarier le mouvement de réaction dudit volet (11) réactif lorsqu'il est poussé, par l'intermédiaire desdits objets (2), par le volet (10) déviateur,
les axes (12, 13) autour desquels les volets (10, 11) sont mobiles respectivement sont décalés longitudinalement de sorte que l'axe (13) du volet (11) réactif se situe en aval de l'axe (12) du volet (10) déviateur,
lesquels axes (12, 13) sont décalés d'une distance d qui est comprise entre ℓ et 1/2ℓ ou ℓ correspond à la longueur desdits objets (2), ladite distance d étant mesurée sur l'axe longitudinal de défilement desdits objets.

2. - Dispositif de formation de lots selon la revendication 1, **caractérisé en ce que** la distance d qui est voisine de 1/2ℓ. qui voisine de

3. - Dispositif de formation de lots selon la revendication 1, **caractérisé en ce que** le volet (11) réactif s'escamote, sous l'effet du volet (10) déviateur, par l'intermédiaire des objets disposés entre les deux, lequel volet (11) réactif, en s'escamotant, dégage une butée (17) qui peut retenir temporairement l'objet amont qui constitue la tête de la file imnobilisée par pincement, faisant office de butée concrète de sécurité.

4. - Dispositif de formation de lots selon la revendication 1, **caractérisé en ce que** la longueur du volet (10) déviateur est de l'ordre de la longueur des lots d'objets (2) à préparer, de l'ordre de trois à cinq objets (2).

5. - Dispositif de formation de lots selon la revendication 1, dans lequel les taquets (39) sont régulièrement répartis et portés par une chaîne (37) sans fin motorisée dont le brin actif est, d'une part, parallèle au sens d'avancement des objets et, d'autre part, disposé en aval du volet (10) déviateur, lequel dispositif est **caractérisé en ce que** chaque taquet (39) est associé, sur ladite chaîne (37) sans fin, à un organe en forme de galet (38) pour manoeuvrer ledit volet (10) déviateur, lequel galet (38) coopère avec un aménagement sur ledit volet (10) qui est en forme de came (14) de façon à faire pivoter ledit volet (10) au fur et à mesure que ledit taquet (39) s'approche de ce dernier, et cet ensemble constitué par le galet (38) et la came (14) permet de coordonner le serrage de la file d'objets et le passage du taquet (39) en vue de son insertion dans l'espace créé par l'immobilisation de ladite file d'objets.

6. - Dispositif de formation de lots selon la revendication 5, **caractérisé en ce que** le volet (11) réactif est soumis à l'action de moyens (16) ressorts, lequel volet (11) réactif procède à la remise en place automatique du volet (10) déviateur par l'intermédiaire des objets (2) qui circulent entre les deux volets (10, 11), lorsque ledit volet (10) déviateur est libéré de son organe de manoeuvre, en l'occurrence lorsque le galet (38) a quitté la came (14) dudit volet (10) déviateur.

7. - Dispositif de formation de lots selon la revendication 5, **caractérisé en ce que** les volets (10, 11) et la butée (17) aval sont disposés sur une même structure dont la position est réglable longitudinalement par rapport au bâti (51) général pour s'adapter à des changements de format des objets et/ou des lots à former, laquelle structure est calée longitudinalement par rapport à la position de la roue (40) de guidage amont de la chaîne (37) sans fin qui porte les galets (38) et les taquets (39), ladite position de cette roue (40) amont étant elle-même réglable longitudinalement pour permettre l'accueil de différents modèles de chaînes (37) dont lesdits taquets (39) et galets (38) sont répartis selon un pas adapté à la longueur L desdits lots à former.

## Patentansprüche

1. Vorrichtung zum Bilden von Chargen aus Objekten (2), die hintereinander in Reihe zirkulieren, die aneinander angefügt sind und die durch das Endlosband (3) einer Fördereinrichtung transportiert werden, wobei die Vorrichtung Mittel zum Blockieren der Reihe, um einen Raum E zwischen zwei aufeinander folgenden Objekten zu erstellen, und Mittel in Form von Sperrklötzen (39), die sich in den Raum E einfügen können, umfasst, **dadurch gekennzeichnet, dass**
die Mittel zum Blockieren der Reihe aus Klappen (10, 11) gebildet sind, die einander gegenüber angeordnet sind, um einen Gang (5) zu bilden, wobei die eine der Klappen (10) die Ablenkklappe (10) bildet und die andere Klappe (11) die Reaktionsklappe (11) bildet, wobei jede Klappe um eine vertikale Achse beweglich ist, die am vorderen Abschnitt von jeder von ihnen liegt,
wobei die Mittel zum Blockieren der Reihe auch - aus einem Mittel, um die Ablenkklappe (10) in der Richtung der Reaktionsklappe (11) zu schwenken und - aus Federmitteln (16), um der Reaktionsbewegung der Reaktionsklappe (11) entgegenzuwirken, wenn sie über die Objekte (2) durch die Ablenkklappe (10) geschoben wird, gebildet sind,
wobei die Achsen (12, 13), um die die Klappen (10, 11) jeweils beweglich sind, longitudinal versetzt sind, so dass die Achse (13) der Reaktionsklappe (11) hinter der Achse (12) der Ablenkklappe (10) liegt,
wobei die Achsen (12, 13) um einen Abstand d versetzt sind, der zwischen ℓ und 1/2 ℓ liegt, wobei ℓ der Länge der Objekte (2) entspricht, wobei der Abstand d auf der Längsachse des Laufs der Objekte gemessen wird.

2. Vorrichtung zum Bilden von Chargen nach Anspruch 1, **dadurch gekennzeichnet, dass** der Abstand d, der nahe 1/2 ℓ liegt.

3. Vorrichtung zum Bilden von Chargen nach Anspruch 1, **dadurch gekennzeichnet, dass** sich die Reaktionsklappe (11) unter der Wirkung der Ablenkklappe (10) über Objekte, die zwischen den beiden angeordnet sind, einzieht, wobei die Reaktionsklappe (11), indem sie sich einzieht, einen Anschlag (17) freigibt, der vorübergehend das vordere Objekt, das den Kopf der blockierten Reihe bildet, durch Einklemmen zurückhalten kann, wobei er als konkreter Sicherheitsanschlag dient.

4. Vorrichtung zum Bilden von Chargen nach Anspruch 1, **dadurch gekennzeichnet, dass** die Länge der Ablenkklappe (10) in der Größenordnung der Länge der vorzubereitenden Chargen von Objekten (2), in der Größenordnung von drei bis fünf Objekten (2), liegt.

5. Vorrichtung zum Bilden von Chargen nach Anspruch 1, wobei die Sperrklötze (39) regelmäßig verteilt sind und durch eine motorisierte Endloskette (37) getragen werden, deren aktiver Strang einerseits parallel zur Fortbewegungsrichtung der Objekte und andererseits hinter der Ablenkklappe (10) angeordnet ist, wobei die Vorrichtung **dadurch gekennzeichnet ist, dass** jeder Sperrklotz (39) an der Endloskette (37) einer Einrichtung in Form einer Rolle (38) zugeordnet ist, um die Ablenkklappe (10) zu manövrieren, wobei die Rolle (38) mit einer Anordnung an der Klappe (10) zusammenwirkt, die in Form eines Nockens (14) vorliegt, um die Klappe (10) in dem Maße zu schwenken, wie der Sperrklotz (39) sich dieser letzteren nähert, und diese Einheit, die durch die Rolle (38) und den Nocken (14) gebildet ist, es ermöglicht, das Einklemmen der Reihe von Objekten und den Übergang des Sperrklotzes (39) im Hinblick auf seine Einfügung in den Raum, der durch die Blockierung der Reihe von Objekten gebildet wird, zu koordinieren.

6. Vorrichtung zum Bilden von Chargen nach Anspruch 5, **dadurch gekennzeichnet, dass** die Reaktionsklappe (11) der Wirkung von Federmitteln (16) ausgesetzt ist, wobei die Reaktionsklappe (11) die automatische Rückstellung der Ablenkklappe (10) über Objekte (2) durchführt, die zwischen den zwei Klappen (10, 11) zirkulieren, wenn die Ablenkklappe (10) von ihrer Manövrierungseinrichtung freigegeben wird, im vorliegenden Fall, wenn die Rolle (38) den Nocken (14) der Ablenkklappe (10) verlassen hat.

7. Vorrichtung zum Bilden von Chargen nach Anspruch 5, **dadurch gekennzeichnet, dass** die Klappen (10, 11) und der hintere Anschlag (17) an ein und derselben Struktur angeordnet sind, deren Position longitudinal in Bezug auf das allgemeine Gestell (51) regulierbar ist, um sich an Änderungen des Formats der Objekte und/oder der zu bildenden Chargen anzupassen, wobei die Struktur longitudinal in Bezug auf die Position des vorderen Führungsrades (40) der Endloskette (37) verriegelt wird, die die Rollen (38) und die Sperrklötze (39) trägt, wobei die Position dieses vorderen Rades (40) selbst longitudinal regulierbar ist, um die Aufnahme von verschiedenen Modellen von Ketten (37) zu ermöglichen, deren Sperrklötze (39) und Rollen (38) gemäß einer Schrittweite verteilt sind, die an die Länge L der zu bildenden Chargen angepasst ist.

## Claims

1. Device for forming batches from objects (2) travelling in single file, against one another, transported by the endless belt (3) of a conveyor, which device comprises means for immobilizing the said file so as to create a space E between two consecutive objects and means in the form of spacer lugs (39) that can be inserted into the said space E, **characterized in that**
the means of immobilizing the file consist of flaps (10, 11) placed facing one another to form a lane (5), one of the flaps (10) constitutes the deflecting flap (10) and the other flap (11) constitutes the reactive flap (11), each flap being able to move about a vertical axis which is situated at the upstream part of each of them,
the means of immobilizing the file are also made up - of means for causing the said deflecting flap (10) to pivot in the direction of the said reactive flap (11), and - of spring means (16) to counter the reactive movement of the said reactive flap (11) when pushed, via the said objects (2), by the deflecting flap (10),
the axes (12, 13) about which the flaps (10, 11) are able to move respectively are offset longitudinally so that the axis (13) of the reactive flap (11) is situated downstream of the axis (12) of the deflecting flap (10),
which axes (12, 13) are offset by a distance d which is comprised between ℓ and 1/2 ℓ, where ℓ corresponds to the length of the said objects (2), the said distance d being measured along the longitudinal axis of travel of the said objects.

2. Device for forming batches according to Claim 1, **characterized in that** the distance d which is close to half ℓ.

3. Device for forming batches according to Claim 1, **characterized in that** the reactive flap (11) retracts, under the effect of the deflecting flap (10), via the objects placed between the two of them, which reactive flap (11) by retracting uncovers a stop (17) which may temporarily restrain the upstream object that constitutes the head of the file immobilized by gripping, acting as a concrete safety stop.

4. Device for forming batches according to Claim 1, **characterized in that** the length of the deflecting flap (10) is of the order of the length of the batches of objects (2) to be prepared, of the order of 3 to 5 objects (2).

5. Device for forming batches according to Claim 1, in which the spacer lugs (39) are evenly distributed and borne by a motorized endless chain (37) the live strand of which is, on the one hand, parallel to the direction of travel of the objects and, on the other hand, arranged downstream of the deflecting flap (10), which device is **characterized in that** each spacer lug (39) is associated, on the said endless chain (37), with a member in the form of a roller (38) for manoeuvring the said deflecting flap (10), which roller (38) collaborates with an arrangement on the said flap (10) which is in the form of a cam (14) so as to cause the said flap (10) to pivot gradually as the said spacer lug (39) approaches it, and this assembly made up of the roller (38) and the cam (14) makes it possible to coordinate the clamping of the file of objects and the movement of the spacer lug (39) so that it can be inserted into the space created by immobilizing the said file of objects.

6. Device for forming batches according to Claim 5, **characterized in that** the reactive flap (11) is subjected to the action of spring means (16), which reactive flap (11) automatically returns the deflecting flap (10) to its position via the objects (2) circulating between the two flaps (10, 11) when the said deflecting flap (10) is freed of its operating member, in this instance when the roller (38) has left the cam (14) of the said deflecting flap (10).

7. Device for forming batches according to Claim 5, **characterized in that** the flaps (10, 11) and the downstream stop (17) are arranged on one and the same structure the position of which can be adjusted longitudinally with respect to the overall framework (51) in order to accommodate changes in the format of the objects and/or of the batches that are to be formed, which structure is held in position longitudinally with respect to the position of the upstream guide wheel (40) of the endless chain (37) which bears the rollers (38) and the spacer lugs (39), the said position of this upstream wheel (40) itself being longitudinally adjustable so as to be able to accommodate different models of chain (37) of which the said spacer lugs (39) and the rollers (38) are set out at a spacing suited to the length L of the said batches that are to be formed.
